(19) Europäisches Patentamt
European Patent Office
Office européen des brevets

(11) **EP 3 318 978 A1**

(12) **EUROPEAN PATENT APPLICATION**
published in accordance with Art. 153(4) EPC

(43) Date of publication:
**09.05.2018 Bulletin 2018/19**

(51) Int Cl.:
***G06F 17/20*** $^{(2006.01)}$

(21) Application number: **16817141.1**

(86) International application number:
**PCT/CN2016/085763**

(22) Date of filing: **14.06.2016**

(87) International publication number:
**WO 2017/000777 (05.01.2017 Gazette 2017/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.06.2015 CN 201510385309**

(71) Applicant: **Yutou Technology (Hangzhou) Co., Ltd.
Hangzhou, Zhejiang 310000 (CN)**

(72) Inventor: **CHEN, Jiansong
Hangzhou
Zhejiang 310000 (CN)**

(74) Representative: **Fiammenghi, Eva et al
Fiammenghi - Fiammenghi
Via delle Quattro Fontane, 31
00184 Roma (IT)**

(54) **SYSTEM AND METHOD FOR SEMANTIC ANALYSIS OF SPEECH**

(57) A system and method for semantic analysis of speech, the semantic speech analysis system being used for implementing semantic analysis of speech in a preset field, comprising: a storage unit (1), used for storing semantic sentences in the preset field, each semantic sentence corresponding to an address, the semantic sentences comprising characters and keywords, each keyword corresponding to a tag, and a word list being prearranged in the storage unit (1), used for storing the address of the semantic sentence in which each word appears and/or the address of the semantic sentence in which each tag appears; an acquisition unit (2), used for acquiring speech sentences to be analysed; an indexing unit (3), being respectively connected to the storage unit (1) and the acquisition unit (2), and being used for searching the semantic sentences in the storage unit (1) on the basis of the speech sentences to be analysed, acquiring candidate semantic sentences matching the speech sentences to be analysed and a corresponding candidate order; and an analysis unit (4), connected to the indexing unit (3), and being used for using a fuzzy match algorithm, on the basis of the sorted candidate sentences, to analyse the speech sentences to be analysed, and acquiring analysis results.

Figure 1

## Description

## Technical Field

The invention relates to the field of natural language understanding of speech, more specifically, to a system and method for high robust semantic analysis of speech.

## Background

Speech recognition involves multidisciplinary fields of phonetics, linguistics, mathematical signal processing, pattern recognition and so as on. With the development of smart devices, direct and friendly interactions between people and smart devices become an important issue. Due to the natural friendliness and convenience of spoken natural language for users, the human-computer interaction based on spoken natural language has become a tendency that has drawn more and more attention from industry. The key technology of spoken natural language interaction lies in the semantic understanding of spoken language, that is, analysing the spoken sentence of the user to obtain the intent that the user wants to express and the corresponding keywords. Generally, the way to achieve the semantic understanding of speech is to collect or write the corresponding semantic sentence manually, and then match the sentence to be analyzed with the sentence to get the analysis result. In the present methods of semantic analysis of speech, most of them are based on a certain grammatical matching, such as regular grammar and context-free grammar, which requires that the speech sentences to be analysed is exactly the same as the semantic sentence in order to analyse successfully. This makes the architect constructing the semantic understanding system need a lot of time to collect the semantic sentence. Because of the inaccurate recognition of the front-end speech recognition module, the analysis of the semantic understanding fails, and because the sentence to be analysed needs to match with a large number of semantic sentences, the analysis takes a long time and the efficiency is low.

## Summary of the invention

For the deficiencies of the present method for semantic analysis of speech, the invention provides a system and method for finding the similar sentences as the speech sentences to be analysed rapidly and accurately in a large-scale semantic sentence database and for providing an accurate result.
The solution is as follows:
A system for semantic analysis of speech, used for implementing semantic analysis of speech in a preset field, comprising:

a storage unit, used for storing semantic sentences in the preset field, each semantic sentence corresponding to an address, the semantic sentences comprising characters and keywords, each keyword corresponding to a tag, and a word list being prearranged in the storage unit, used for storing an address of the semantic sentence in which each word appears and/or an address of the semantic sentence in which each tag appears;
an acquisition unit, used for acquiring speech sentences to be analysed;
an indexing unit, being respectively connected to the storage unit and the acquisition unit, and being used for searching the semantic sentences in the storage unit on the basis of the speech sentences to be analysed, acquiring candidate semantic sentences matching the speech sentences to be analysed and a corresponding candidate order; and
an analysis unit, connected to the indexing unit, and being used for using a fuzzy match algorithm, on the basis of the sorted candidate semantic sentences, to analyse the speech sentences to be analysed, and acquiring analysis results.

Preferably, the indexing unit comprises:

an extraction module, used for extracting a keyword in the speech sentences to be analysed, the keyword being same as that in the storage unit, and acquiring a tag corresponding to the keyword;
a substitution module, connected to the extraction module, and being used for replacing the keyword in the speech sentences to be analysed with the tag corresponding to the keyword, to form a substituted speech sentences;
an indexing module, connected to the substitution module, and being used for searching in the word list in the storage unit, on the basis of the character and the tag in the substituted speech sentences, to acquire the address of the semantic sentence matching the character and/or the address of the semantic sentence matching the tag;
a sorting module, connected to the indexing module, and being used for sorting the semantic sentences matching the character and/or the semantic sentence matching the tag in the substituted speech sentences, by comparing a similarity of the substituted speech sentences, to acquire the sorted candidate semantic sentences.

Preferably, the sorting module uses a score formula to acquire a score of similarity compared by the candidate semantic sentences and the substituted speech sentences; the score formula is:

$$S=(S1+S2)/2$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences.

Preferably, the step of the analysis unit using a fuzzy match algorithm, on the basis of the sorted candidate semantic sentences, to analyse the speech sentences to be analysed is that:

establishing a finite state automation network, upon which the speech sentences to be analysed is rated, comparing scores of the speech sentences to be analysed, setting a highest score of the speech sentences to be analysed as the analysis result.

Preferably, the word list is hash table.

A method for semantic analysis of speech, applying to the system for semantic analysis of speech according to claim 1, comprising the steps of:

S1, acquiring speech sentences to be analysed;
S2, searching the semantic sentences in the storage unit on the basis of the speech sentences to be analysed, acquiring candidate semantic sentences matching the speech sentences to be analysed and a corresponding candidate order;
S3, using a fuzzy match algorithm, on the basis of the sorted candidate semantic sentences, to analyse the speech sentences to be analysed, and acquiring analysis results.

Preferably, the step S2 is:

S21, extracting a keyword in the speech sentences to be analysed, the keyword being same as that in the storage unit, and acquiring a tag corresponding to the keyword;
S22, replacing the keyword in the speech sentences to be analysed with the tag corresponding to the keyword, to form a substituted speech sentences;
S23, searching in the word list in the storage unit, on the basis of the character and the tag in the substituted speech sentences, to acquire an address of the semantic sentence matching the character and/or an address of the semantic sentence matching the tag;
S24, sorting the semantic sentences matching the character and/or the semantic sentence matching the tag in the substituted speech sentences, by comparing a similarity of the substituted speech sentences, to acquire the sorted candidate semantic sentences.

Preferably, the step S24 uses a score formula to acquire a score of similarity compared by the candidate semantic sentences and the substituted speech sentences

es;
the score formula is:

$$S=(S1+S2)/2;$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences.

Preferably, the step S3 is:

S31, establishing a finite state automation network for each of the candidate semantic sentences;
S32, rating the speech sentences to be analysed upon the finite state automation network;
S33, comparing scores of the speech sentences to be analysed, setting a highest score of the speech sentences to be analysed as the analysis result.

Preferably, the word list is hash table.

The beneficial effect of the solution mentioned above is as follows:

In the system for semantic analysis of speech, the sentences corresponding to the speech sentences to be analysed can be searched rapidly by the indexing unit, so as to increase the efficiency of matching; the utilized fuzzy match algorithm allows the inconsistence between the speech sentences to be analysed and the candidate semantic sentences, so as to allow the fault tolerance and increase the robust of system. In the method for semantic analysis of speech, it is available to find the sentences related to the speech sentence to be analysed rapidly, so as to increase the efficiency of matching, so as to find the similar sentences as the speech sentences to be analysed rapidly and accurately in a large-scale semantic sentence database and to output an accurate result.

**Brief descriptions of the drawings**

The accompanying drawings, together with the specification, illustrate exemplary embodiments of the present disclosure, and, together with the description, serve to explain the principles of the present invention.

Figure 1 is a module diagram of the system for semantic analysis of speech according to an embodiment of the invention;
Figure 2 is a flow diagram of the system for semantic analysis of speech according to an embodiment of the invention;
Figure 3 is a flow diagram of searching the semantic sentences in the storage unit of the invention;
Figure 4 is a flow diagram of analysing the speech sentences to be analysed of the invention;
Figure 5 is an indexing diagram of the sentence in a reverse order of the invention;
Figure 6 is a diagram of the finite state automation corresponding to the sentences of the invention.

## Detailed description

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

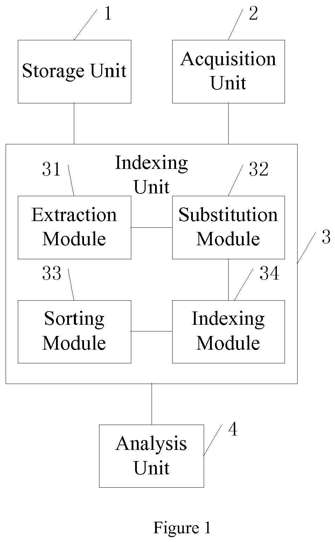

As shown in Figure 1, a system for semantic analysis of speech, used for implementing semantic analysis of speech in a preset field, comprising:

a storage unit 1, used for storing semantic sentences in the preset field, each semantic sentence corresponding to an address, the semantic sentences comprising characters and keywords, each keyword corresponding to a tag, and a word list being prearranged in the storage unit 1, used for storing an address of the semantic sentence in which each word appears and/or an address of the semantic sentence in which each tag appears;

an acquisition unit 2, used for acquiring speech sentences to be analysed;

an indexing unit 3, being respectively connected to the storage unit 1 and the acquisition unit 2, and being used for searching the semantic sentences in the storage unit on the basis of the speech sentences to be analysed, acquiring candidate semantic sentences matching the speech sentences to be analysed and a corresponding candidate order; and

an analysis unit 4, connected to the indexing unit 3, and being used for using a fuzzy match algorithm, on the basis of the sorted candidate semantic sentences, to analyse the speech sentences to be analysed, and acquiring analysis results.

In the embodiment, the sentences corresponding to the speech sentences to be analysed can be searched rapidly by the indexing unit 3, so as to increase the efficiency of matching; the utilized fuzzy match algorithm allows the inconsistence between the speech sentences to be analysed and the candidate semantic sentences when analyzing the speech sentences to be analysed, so that the architect constructing the semantic understanding system does not need to compile a lot of sentences with a little discrepancy. Meanwhile, it allows the fault tolerance for the error of the front-end of the speech recognition, and increase the robust of system.

In a preferred embodiment, the indexing unit 3 comprises:

an extraction module 31, used for extracting a keyword in the speech sentences to be analysed, the keyword being same as that in the storage unit 1, and acquiring a tag corresponding to the keyword;

a substitution module 32, connected to the extraction module 31, and being used for replacing the keyword in the speech sentences to be analysed with the tag corresponding to the keyword, to form a substituted speech sentences;

an indexing module 34, connected to the substitution module 32, and being used for searching in the word list in the storage unit 1, on the basis of the character and the tag in the substituted speech sentences, to acquire the address of the semantic sentence matching the character and/or the address of the semantic sentence matching the tag;

a sorting module 33, connected to the indexing module 34, and being used for sorting the semantic sentences matching the character and/or the semantic sentence matching the tag in the substituted speech sentences, by comparing a similarity of the substituted speech sentences, to acquire the sorted candidate semantic sentences.

In the embodiment, the indexing unit 3 is used for searching out the candidate semantic sentences similar to the speech sentences to be analysed when the speech sentences to be analysed are provided.

After acquiring the speech sentences to be analysed are provided, abstract the keyword thereof, detect by the word list, review all the possible characters throughout the speech sentences to be analysed and lookup if the characters exist in the word list, if so, record the position of the speech sentences to be analysed on which the character is located; detect by the statistic model, may select the Conditional Radom Fields (CRF) to train the statistic model and detect; replace the keyword in the speech sentences to be analysed with the corresponding tag. The tag in the speech sentences to be analysed and the unreplaced characters are searched. In the embodiment, each character or tag is searched in the word list, so that the address of the semantic sentences thereof is obtained. It can be recorded that how many characters and tags are matched in each of the semantic sentences and the sentences to be search. The analysis result is sorted on the basis of score of the similarity, the sentence with the highest score is selected as the candidate semantic sentence.

In a preferred embodiment, the sorting module 33 uses a score formula to acquire a score of similarity compared by the candidate semantic sentences and the substituted speech sentences;
the score formula is:

$$S=(S1+S2)/2$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences

In a preferred embodiment, the step of the analysis unit 4 using a fuzzy match algorithm, on the basis of the sorted candidate semantic sentences, to analyse the speech sentences to be analysed is that:
establishing a finite state automation network, upon which the speech sentences to be analysed is rated, comparing scores of the speech sentences to be analysed, setting a highest score of the speech sentences to be analysed as the analysis result.

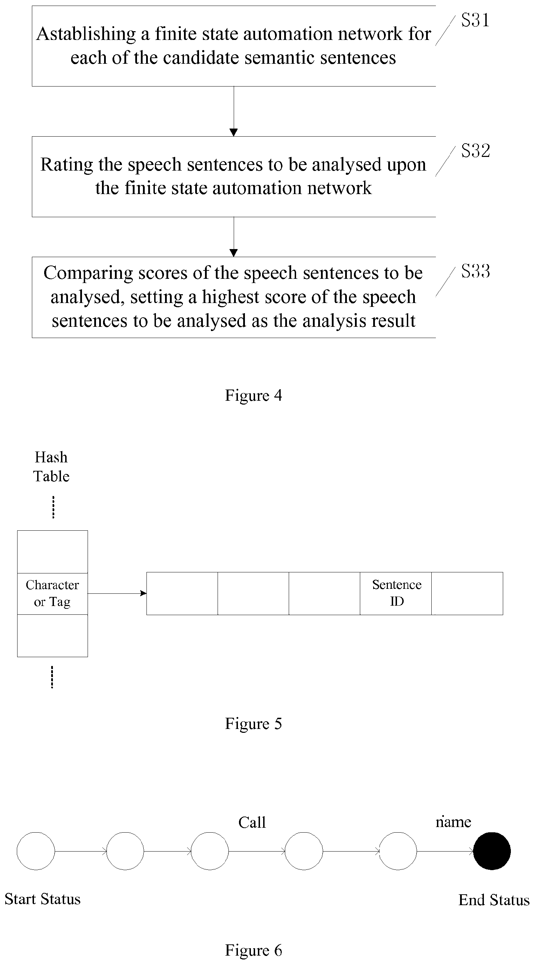

In the embodiment, the analysis unit 4 can establish finite state automation network for each of the candidate semantic sentences. Each character or each tag can function as an arc of the finite state automation network. Figure 6 shows a diagram, in which a sentence corresponds to a finite state automation. The speech sentences to be analysed is analysed and rated based on the finite state automation network. Specifically, the keyword in the speech sentences to be analysed is replaced by the corresponding tag on the basis of the result of keyword analysing. We assume that the speech sentences to be analysed have n results of keyword analysing, there would be 2n possible tags. We remove the tags whose positions are conflicted among the 2n possible tags, and the remains are the candidate tag substitute sentence to be analysed. Then we execute a fuzzy match between the substituted speech sentences and the finite state automation network generated by each sentence, there are a lots of methods for fuzzy match, such as the method introduced in "Error-tolerant Finite-state Recognition with Applications to Morphological Analysis and Spelling Correction," and we don't explain it any more as it is prior art. The method of fuzzy match can rapidly calculate the extent of match via the dynamic programming algorithm. We get the best sentence based on the score and acquire the corresponding analysis result.

Further, the procedure of analysing and rating allows the insertion and/or deletion and/or replacement operation between the speech sentences to be analysed and the semantic sentences of speech, and the number of the insertion and/or deletion and/or replacement operation is limited by a predetermined threshold. When the number of it is less than the predetermined threshold, the speech sentences to be analysed match the corresponding semantic sentences. When the number of it is more than the number of the predetermined threshold, the speech sentences to be analysed do not match the corresponding semantic sentences.

In a preferred embodiment, the word list is hash table.

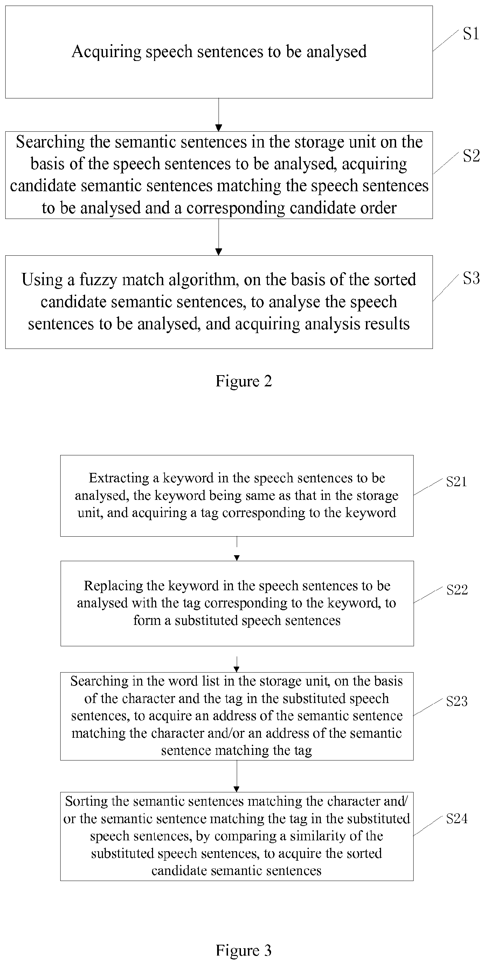

As shown in Figure 2, there is a method for semantic analysis of speech, applying to the system for semantic analysis of speech, comprising the steps of:

S1, acquiring speech sentences to be analysed;
S2, searching the semantic sentences in the storage unit on the basis of the speech sentences to be analysed, acquiring candidate semantic sentences matching the speech sentences to be analysed and a corresponding candidate order;
S3, using a fuzzy match algorithm, on the basis of the sorted candidate semantic sentences, to analyse the speech sentences to be analysed, and acquiring analysis results.

In the embodiment, by this method the sentence corresponding to the speech sentences to be analysed can be searched out rapidly, so that the match efficiency is increased, so as to find the sentence similar to the speech sentences to be analysed rapidly and accurately in a large-scale semantic sentence database and to provide an accurate result.

As shown in Figure 3, in a preferred embodiment, the step S2 is:

> S21, extracting a keyword in the speech sentences to be analysed, the keyword being same as that in the storage unit 1, and acquiring a tag corresponding to the keyword;
> S22, replacing the keyword in the speech sentences to be analysed with the tag corresponding to the keyword, to form a substituted speech sentences;
> S23, searching in the word list in the storage unit 1, on the basis of the character and the tag in the substituted speech sentences, to acquire an address of the semantic sentence matching the character and/or an address of the semantic sentence matching the tag;
> S24, sorting the semantic sentences matching the character and/or the semantic sentence matching the tag in the substituted speech sentences, by comparing a similarity of the substituted speech sentences, to acquire the sorted candidate semantic sentences.

In the embodiment, the method for semantic analysis of speech comprises two parts, which are off-line phase and on-line phase. The off-line phase comprises: collecting and arranging the semantic sentences in the corresponding field according to the defined requirement. The semantic sentences thereof conform to the speech standard and the keyword from which the semantic sentence needs to be analysed is represented by tag. For example, a possible sentence in the telephone field is "call Zhang Shan," as "Zhang Shan" is the name keyword to be analysed, we replace the keyword to be analysed with a tag, such as: "Zhang Shan" is replaced by "$name," so that the sentence after being queried is "call $name." We build an index for the semantic sentences in every field, we build a common index for the character and tag in the semantic sentences, in which the tag is indexed as a character. As shown in Figure 5, the hash index in a reversed order is used. What store in the hash table is all the characters and the tags in the semantic sentences, each character and each tag is followed by a list, each element in the list stores the address (ID) of the character or the tag in the sentence.

The on-line phase comprises: search out the candidate semantic sentences similar to the sentences to be analysed rapidly by the index, when the speech sentences to be analysed is provided. And the step is as follows:

After acquiring the speech sentences to be analysed are provided, abstract the keyword thereof, detect by the word list, establish a hash index for each character in the word list, review all the possible characters throughout the speech sentences to be analysed and lookup if the characters exist in the hash table, if so, record the position of the speech sentences to be analysed on which the character is located; detect by the statistic model, may select the Conditional Radom Fields (CRF) to train the statistic model and detect; replace the keyword in the speech sentences to be analysed with the corresponding tag. The replacement is same as that of the off-line phase. The tag in the speech sentences to be analysed and the unreplaced characters are searched in the index. In the embodiment, each character or tag is searched in the hash index which is in a reversed order, so that the address (ID) of the semantic sentences thereof is obtained. It can be recorded that how many characters and tags are matched in each of the semantic sentences and the sentences to be search. The analysis result is sorted on the basis of score of the similarity, the sentence with the highest score is selected as the candidate semantic sentence.

In a preferred embodiment, the step S24 uses a score formula to acquire a score of similarity compared by the candidate semantic sentences and the substituted speech sentences;
the score formula is:

$$S=(S1+S2)/2;$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences.

As shown in Figure 4, in a preferred embodiment, the step S3 is:

> S31, establishing a finite state automation network for each of the candidate semantic sentences;
> S32, rating the speech sentences to be analysed upon the finite state automation network;
> S33, comparing scores of the speech sentences to be analysed, setting a highest score of the speech sentences to be analysed as the analysis result.

In the embodiment, it can establish finite state automation network for each of the candidate semantic sentences. Each character or each tag can function as an arc of the finite state automation network. Figure 6 shows a diagram, in which a sentence corresponds to a finite state automation. The speech sentences to be analysed is analysed and rated based on the finite state automation network. Specifically, the keyword in the speech sentences to be analysed is replaced by the corresponding tag on the basis of the result of keyword analysing. We assume that the speech sentences to be analysed have n results of keyword analysing, there would be 2n possible tags. We remove the tags whose positions are conflicted among the 2n possible tags, and the remains are the candidate tag substitute sentences to be analysed. Then we execute a fuzzy match between the substituted speech sentences and the finite state automation network generated by each sentence, there are a lots of methods for fuzzy match, such as the method introduced in "Error-tolerant Finite-state Recognition with Applications to Morphological Analysis and Spelling Correction," and we don't explain it any more as it is prior art. The method of fuzzy match can rapidly calculate the extent of match via the dynamic programming algorithm. We get the best sentence based on the score and acquire the corresponding analysis result.

Further, the procedure of analysing and rating allows the insertion and/or deletion and/or replacement operation between the speech sentences to be analysed and the semantic sentences of speech, and the number of the insertion and/or deletion and/or replacement operation is limited by a predetermined threshold. When the number of it is less than the predetermined threshold, the speech sentences to be analysed match the corresponding semantic sentences. When the number of it is more than the predetermined threshold, the speech sentences to be analysed do not match the corresponding semantic sentences.

The foregoing is only the preferred embodiments of the invention, not thus limiting embodiments and scope of the invention, those skilled in the art should be able to realize that the schemes obtained from the content of specification and figures of the invention are within the scope of the invention.

## Claims

1. A system for semantic analysis of speech, used for implementing semantic analysis of speech in a preset field, comprising:

a storage unit, used for storing semantic sentences in the preset field, each semantic sentence corresponding to an address, the semantic sentences comprising characters and keywords, each keyword corresponding to a tag, and a word list being prearranged in the storage unit, used for storing an address of the semantic sentence in which each word appears and/or an address of the semantic sentence in which each tag appears;
an acquisition unit, used for acquiring speech sentences to be analysed;
an indexing unit, being respectively connected to the storage unit and the acquisition unit, and being used for searching the semantic sentences in the storage unit on the basis of the speech sentences to be analysed, acquiring candidate semantic sentences matching the speech sentences to be analysed and a corresponding candidate order; and
an analysis unit, connected to the indexing unit, and being used for using a fuzzy match algorithm, on the basis of the sorted candidate semantic sentences, to analyse the speech sentences to be analysed, and acquiring analysis results.

2. The system for semantic analysis of speech according to claim 1, wherein the indexing unit comprises:

an extraction module, used for extracting a keyword in the speech sentences to be analysed, the keyword being same as that in the storage unit, and acquiring a tag corresponding to the keyword;
a substitution module, connected to the extraction module, and being used for replacing the keyword in the speech sentences to be analysed with the tag corresponding to the keyword, to form a substituted speech sentences;
an indexing module, connected to the substitution module, and being used for searching in the word list in the storage unit, on the basis of the character and the tag in the substituted speech sentences, to acquire the address of the semantic sentence matching the character and/or the address of the semantic sentence matching the tag;
a sorting module, connected to the indexing module, and being used for sorting the semantic sentences matching the character and/or the semantic sentence matching the tag in the substituted speech sentences, by comparing a similarity of the substituted speech sentences, to acquire the sorted candidate semantic sentences.

3. The system for semantic analysis of speech according to claim 2, wherein the sorting module uses a score formula to acquire a score of similarity compared by the candidate semantic sentences and the substituted speech sentences;
the score formula is:

$$S=(S1+S2)/2$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences.

4. The system for semantic analysis of speech according to claim 1, wherein the step of the analysis unit using a fuzzy match algorithm, on the basis of the sorted candidate semantic sentences, to analyse the speech sentences to be analysed is that:

> establishing a finite state automation network, upon which the speech sentences to be analysed is rated, comparing scores of the speech sentences to be analysed, setting a highest score of the speech sentences to be analysed as the analysis result.

5. The system for semantic analysis of speech according to claim 1, wherein the word list is hash table.

6. A method for semantic analysis of speech, applying to the system for semantic analysis of speech according to claim 1, comprising the steps of:

> S1, acquiring speech sentences to be analysed;
> S2, searching the semantic sentences in the storage unit on the basis of the speech sentences to be analysed, acquiring candidate semantic sentences matching the speech sentences to be analysed and a corresponding candidate order;
> S3, using a fuzzy match algorithm, on the basis of the sorted candidate semantic sentences, to analyse the speech sentences to be analysed, and acquiring analysis results.

7. The method for semantic analysis of speech according to claim 6, wherein the step S2 is:

> S21, extracting a keyword in the speech sentences to be analysed, the keyword being same as that in the storage unit, and acquiring a tag corresponding to the keyword;
> S22, replacing the keyword in the speech sentences to be analysed with the tag corresponding to the keyword, to form a substituted speech sentences;
> S23, searching in the word list in the storage unit, on the basis of the character and the tag in the substituted speech sentences, to acquire an address of the semantic sentence matching the character and/or an address of the semantic sentence matching the tag;
> S24, sorting the semantic sentences matching the character and/or the semantic sentence matching the tag in the substituted speech sentences, by comparing a similarity of the substituted speech sentences, to acquire the sorted candidate semantic sentences.

8. The method for semantic analysis of speech according to claim 7, wherein the step S24 uses a score formula to acquire a score of similarity compared by the candidate semantic sentences and the substituted speech sentences;
the score formula is:

$$S=(S1+S2)/2;$$

wherein, S represents the score of similarity compared by the candidate semantic sentences and the substituted speech sentences, S1 represents the portion of the character and/or the tag in the candidate semantic sentences to the substituted speech sentences, S2 represents the portion of the character and/or the tag in the candidate semantic sentences to the candidate semantic sentences.

9. The method for semantic analysis of speech according to claim 6, wherein the step S3 is:

> S31, establishing a finite state automation network for each of the candidate semantic sentences;
> S32, rating the speech sentences to be analysed upon the finite state automation network;
> S33, comparing scores of the speech sentences to be analysed, setting a highest score of the speech sentences to be analysed as the analysis result.

10. The method for semantic analysis of speech according to claim 7, wherein the word list is hash table.

Figure 1

Acquiring speech sentences to be analysed  /S1

Searching the semantic sentences in the storage unit on the basis of the speech sentences to be analysed, acquiring candidate semantic sentences matching the speech sentences to be analysed and a corresponding candidate order  /S2

Using a fuzzy match algorithm, on the basis of the sorted candidate semantic sentences, to analyse the speech sentences to be analysed, and acquiring analysis results  /S3

Figure 2

Extracting a keyword in the speech sentences to be analysed, the keyword being same as that in the storage unit, and acquiring a tag corresponding to the keyword  /S21

Replacing the keyword in the speech sentences to be analysed with the tag corresponding to the keyword, to form a substituted speech sentences  /S22

Searching in the word list in the storage unit, on the basis of the character and the tag in the substituted speech sentences, to acquire an address of the semantic sentence matching the character and/or an address of the semantic sentence matching the tag  /S23

Sorting the semantic sentences matching the character and/ or the semantic sentence matching the tag in the substituted speech sentences, by comparing a similarity of the substituted speech sentences, to acquire the sorted candidate semantic sentences  /S24

Figure 3

Astablishing a finite state automation network for each of the candidate semantic sentences / S31

Rating the speech sentences to be analysed upon the finite state automation network / S32

Comparing scores of the speech sentences to be analysed, setting a highest score of the speech sentences to be analysed as the analysis result / S33

Figure 4

Hash Table

⋮

Character or Tag → | | | | Sentence ID | |

⋮

Figure 5

Call                                        name

○ → ○ → ○ → ○ → ○ → ●

Start Status                          End Status

Figure 6

# INTERNATIONAL SEARCH REPORT

| International application No. |
| --- |
| PCT/CN2016/085763 |

## A. CLASSIFICATION OF SUBJECT MATTER

G06F 17/20 (2006. 01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI: YÙTOU KĒJÌ, CHEN, Jiansong, semantic parsing, spoken language, voice, natural sentence, sentence pattern, index, search, rank, fuzzy matching, natural 1w language, speech, semantic, syntax, pars+, analysis

## C. DOCUMENTS CONSIDERED TO BE RELEVANT

| Category* | Citation of document, with indication, where appropriate, of the relevant passages | Relevant to claim No. |
| --- | --- | --- |
| A | CN 103309846 A (BEIJING YUNZHISHENG INFORMATION TECHNOLOGY CO., LTD.) 18 September 2013 (18.09.2013) descritpion, paragraphs [0127]-[0142], and figures 7-9 | 1-10 |
| A | CN 102968409 A (HISENSE GROUP CO., LTD.) 13 March 2013 (13.03.2013) the whole document | 1-10 |
| A | CN 102681982 A (SHANGHAI YUNSOU NETWORK TECHNOLOGY CO., LTD.) 19 September 2012 (19.09.2012) the whole document | 1-10 |
| A | CN 1949211 A (INSTITUTE OF AUTOMATION, CHINESE ACADEMY OF SCIENCES) 18 April 2007 (18.04.2007) the whole document | 1-10 |
| A | CN 104360994 A (IFLYTEK CO., LTD.) 18 February 2015 (18.02.2015) the whole document | 1-10 |
| A | CN 103268313 A (BEIJING YUNZHISHENG INFORMATION TECHNOLOGY CO., LTD.) 28 August 2013 (28.08.2013) the whole document | 1-10 |

☒ Further documents are listed in the continuation of Box C.     ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 10 September 2016 | 20 September 2016 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHOU, Xuan Telephone No. (86-10) 62413214 |
| --- | --- |

Form PCT/ISA /210 (second sheet) (July 2009)

**EP 3 318 978 A1**

| | INTERNATIONAL SEARCH REPORT | International application No. |
|---|---|---|
| | | PCT/CN2016/085763 |

C (Continuation). DOCUMENTS CONSIDERED TO BE RELEVANT

| Category* | Citation of document, with indication, where appropriate, of the relevant passages | Relevant to claim No. |
|---|---|---|
| A | US 2010235164 A1 (INVENTION MACHINE CORPORATION) 16 September 2010 (16.09.2010) the whole document | 1-10 |
| A | JPH 08249334 A (CSK CORP.) 27 September 1996 (27.09.1996) the whole document | 1-10 |

Form PCT/ISA /210 (continuation of second sheet) (July 2009)

13

**INTERNATIONAL SEARCH REPORT**
Information on patent family members

| | International application No. |
| --- | --- |
| | PCT/CN2016/085763 |

| Patent Documents referred in the Report | Publication Date | Patent Family | Publication Date |
| --- | --- | --- | --- |
| CN 103309846 A | 18 September 2013 | CN 103309846 B | 25 May 2016 |
| CN 102968409 A | 13 March 2013 | CN 102968409 B | 09 September 2015 |
| CN 102681982 A | 19 September 2012 | None | |
| CN 1949211 A | 18 April 2007 | CN 100405362 C | 23 July 2008 |
| CN 104360994 A | 18 February 2015 | None | |
| CN 103268313 A | 28 August 2013 | CN 103268313 B | 02 March 2016 |
| US 2010235164 A1 | 16 September 2010 | US 8666730 B2 | 04 March 2014 |
| | | CN 102439595 A | 02 May 2012 |
| | | CN 102439590 A | 02 May 2012 |
| | | US 2010235165 A1 | 16 September 2010 |
| | | JP 2012520528 A | 06 September 2012 |
| | | EP 2406731 A2 | 18 January 2012 |
| | | KR 20110134909 A | 15 December 2011 |
| | | WO 2010105216 A2 | 16 September 2010 |
| | | JP 2012520527 A | 06 September 2012 |
| | | EP 2406738 A2 | 18 January 2012 |
| | | US 8583422 B2 | 12 November 2013 |
| | | KR 20120009446 A | 31 January 2012 |
| | | WO 2010105214 A2 | 16 September 2010 |
| JPH 08249334 A | 27 September 1996 | JP 3605735 B2 | 22 December 2004 |